# EUROPÄISCHE PATENTSCHRIFT

(11) **EP 4 041 036 B1**
(45) Veröffentlichungstag und Bekanntmachung des Hinweises auf die Patenterteilung: **28.01.2026**
(21) Anmeldenummer: 20786544.5
(22) Anmeldetag: 06.10.2020
(51) Int. Cl.: A47J 31/44

(54) **GETRÄNKEBEREITER UND VERFAHREN ZUR ZUBEREITUNG MINDESTENS EINES GETRÄNKS**
BEVERAGE MAKER AND METHOD FOR PREPARING AT LEAST ONE BEVERAGE
MACHINE DE PRÉPARATION DE BOISSONS ET PROCÉDÉ DE PRÉPARATION D'AU MOINS UNE BOISSON

(30) Priorität: 11.10.2019 DE 102019215649
(43) Veröffentlichungstag der Anmeldung: 17.08.2022
(73) Patentinhaber: WMF GmbH, 73312 Geislingen/Steige (DE)
(72) Erfinder: GÖLTENBOTH, Frank, 89250 Senden (DE)
(74) Vertreter: Pfenning, Meinig & Partner mbB
(86) Internationale Anmeldenummer: PCT/EP2020/077981
(87) Internationale Veröffentlichungsnummer: WO 2021/069430

(56) Entgegenhaltungen:
- WO-A2-02/089074
- CH-A5- 573 736
- DE-A1- 102016 213 173
- DE-B3- 102006 060 748
- DE-U1- 202018 101 556

## Beschreibung

Es wird ein Getränkebereiter bereitgestellt, der eine Einheit zur Zubereitung von mindestens einem Getränk, einen Getränkeauslauf, eine Anzeigeeinheit, eine Steuereinheit und einen Drehteller mit mehreren Sektoren aufweist. Die Anzeigeeinheit ist konfiguriert, den Drehteller und eine gegenwärtige Position der Sektoren des Drehtellers darzustellen. Die Steuereinheit ist konfiguriert, nach einer Auswahl von mindestens einem Getränk durch einen Benutzer die Anzeigeeinheit zu veranlassen, einen Getränkebehälter, der für das mindestens eine ausgewählte Getränk geeignet ist, in einem Außensektor des Drehtellers darzustellen und nach einem Befehl zur Zubereitung des mindestens einen ausgewählten Getränks, den Drehteller zu veranlassen, sich so zu drehen, dass der Außensektor die Position des Bezugssektors des Drehtellers einnimmt. Zudem wird von der Steuereinheit die Anzeigeeinheit veranlasst, die Änderung der Position des Drehtellers und des Getränkebehälters darzustellen und der Getränkebereiter veranlasst, das mindestens eine ausgewählte Getränk durch die Einheit zuzubereiten und über den Getränkeauslauf in den im Bezugssektor befindlichen Getränkebehälter auszugeben. Ein entsprechendes Verfahren zur Zubereitung mindestens eines Getränks wird vorgestellt.

Die DE 10 2006 060 748 B3 offenbart eine Getränkemachine für die Zubereitung einer Mehrzahl an Getränkeportionen in Tassen, wobei die Getränkemaschine eine abnehmbare und drehbare Tassenaufnahmeplatte aufweist, auf der die Tassen abstellbar und nacheinander mit dem Getränk befüllbar sind. Diese Getränkemaschine hat jedoch den Nachteil, dass der Benutzer nach Programmieren einer bestimmten Reihenfolge einer Zubereitung von Getränken am Bedienfeld der Getränkemaschine lediglich die Bezeichnung der jeweiligen Getränke dargestellt bekommt. Ein Benutzer braucht somit eine gewisse Zeit für die Überlegung, welcher jeweilige Getränkebehälter für die jeweilige Bezeichnung eines Getränks in Frage kommt. Dies verzögert die Ausgabe eines Getränks und damit die Geschwindigkeit, mit der ein Getränk bzw. mehrere Getränke über den Getränkebereiter ausgegeben werden können. Zudem ist die Überlegung auf Seiten eines Benutzers mit einer bestimmten Fehleranfälligkeit verbunden, da sich der Benutzer in bestimmten Situationen für einen falschen (d.h. einen ungeeigneten oder unangemessenen) Getränkebehälter entscheidet und diesen auf die Tassenaufnahmeplatte stellt und somit die Ausgabe "blockiert" oder eine falsche Ausgabe forciert. Diese Probleme sind bei unerfahrenen Benutzern noch deutlicher ausgeprägt als bei erfahrenen Benutzern.

Die DE 10 2016 213 173 A1 offenbart einen Getränkeautomat, der eine Eingabeeinrichtung zur Erfassung einer Anforderung eines ersten und eines zweiten Getränks enthält, wobei dem ersten Getränk ein erstes Trinkgefäß und dem zweiten Getränk ein zweites Trinkgefäß zugeordnet ist und die Getränke und deren Trinkgefäße voneinander verschieden sind. Ferner ist an dem Getränkeautomat ein Spender zur Abgabe des ersten oder des zweiten Getränks, eine Verfahreinrichtung und eine Steuereinrichtung vorgesehen. Ferner umfasst der Getränkeautomat eine Ablage für mehrere Trinkgefäße, wobei die Verfahreinrichtung dazu eingerichtet ist, die Ablage und den Spender gegeneinander zu verfahren. Zudem weist der Getränkeautomat eine erste Ausgabeeinrichtung auf, die einen optischen Hinweis (z.B. einen Text oder ein Symbol) auf ein leeres Trinkgefäß bereitstellt, das auf der Ablage anzuordnen ist. Dieser Getränkeautomat hat jedoch den Nachteil, dass der Benutzer eine gewisse Zeit für die Überlegung braucht, welcher jeweilige Getränkebehälter bei dem dargestellten optischen Hinweis (z.B. den dargestellten Text oder das dargestellte Symbol) gemeint ist. Beispielsweise kann es aufgrund des geringen Informationsgehalts einer symbolischen Darstellung zu Verwechslungen und Fehlbedienungen kommen. Dies verzögert die Ausgabe eines Getränks und damit die Geschwindigkeit, mit der ein Getränk bzw. mehrere Getränke über den Getränkebereiter ausgegeben werden können, da die Ablage mit einem falschen (d.h. einem ungeeigneten oder unangemessenen) Getränkebehälter "blockiert" wird oder eine falsche Ausgabe forciert wird. Das beschriebene Problem ist bei unerfahrenen Benutzern noch deutlicher ausgeprägt als bei erfahrenen Benutzern.

Die DE 20 2018 101 556 U1 offenbart eine Maschine zur Zubereitung von Brühgetränken, enthaltend mindestens einen Brüheinheit zur Herstellung eines Brühgetränks und mindestens einem Auslauf zur Abgabe des Brühgetränks in ein Trinkgefäß, wobei ein Drehteller zum Transport wenigstens eines Trinkgefäßes relativ zum Auslauf vorgesehen ist, wodurch der Trinkgefäßtransport automatisch durch die Maschine erfolgen kann und sich die Zahl der nötigen Benutzerzugriffe reduzieren lässt. Die Maschine erlaubt ein sequentielles Ausgeben von Brühgetränken, wobei die Ausgabe entweder automatisch erfolgt, nachdem ein bestimmtes Trinkgefäß von der Maschine über einen Sensor erkannt wurde oder manuell ausgelöst erfolgt, nachdem ein Ausgabebefehl von einem Benutzer über eine Bedieneinheit der Maschine (z.B. einen kombinierten Drehknopf mit Tastfunktion) eingegeben wurde. Der Nachteil der automatischen Ausgabe ist, dass bei einem Bestücken des Drehtellers mit einem falschen Trinkgefäß ein falsches (d.h. unerwünschtes) Brühgetränk ausgegeben wird. Es verzögert sich somit die Ausgabe des richtigen (d.h. erwünschten) Getränks und damit die Geschwindigkeit, mit der richtige Getränke über die Maschine ausgegeben werden können, da eine falsche Brühgetränkeausgabe forciert wird. Bei der manuell ausgelösten Ausgabe von Getränken ergibt sich das bekannte Problem, dass der Benutzer vor der Eingabe eines Befehls zur Ausgabe eines bestimmten Getränks wissen muss, welches Trinkgefäß für das ausgewählte Getränk in Frage kommt (d.h. geeignet oder angemessen ist). Hierfür braucht der Benutzer eine gewisse Zeit, was die Ausgabe eines Getränks und damit die Geschwindigkeit verzögert, mit der Getränke über den Getränkebereiter ausgegeben werden können. Das beschriebene Problem ist bei unerfahrenen Benutzern noch deutlicher ausgeprägt als bei erfahrenen Benutzern.

Ausgehend hiervon war es die Aufgabe der vorliegenden Erfindung, einen Getränkebereiter bereitzustellen, der die im Stand der Technik bekannten Probleme nicht aufweist. Insbesondere sollte der Getränkebereiter (v.a. auch unerfahrenen Benutzern) eine weniger fehleranfällige und schnellere Zubereitung von Getränken in den richtigen (d.h. geeigneten oder angemessenen) Getränkebehälter ermöglichen. Ferner sollte ein Verfahren zur Zubereitung mindestens eines Getränks vorgestellt werden, mit dem eine weniger fehleranfällige und schnellere Zubereitung von Getränken in den richtigen Getränkebehälter möglich ist.

Die Aufgabe wird gelöst durch den Getränkebereiter mit den Merkmalen von Anspruch 1 und das Verfahren mit den Merkmalen von Anspruch 14. Die abhängigen Ansprüche zeigen vorteilhafte Weiterbildungen auf.

Es wird ein Getränkebereiter bereitgestellt, enthaltend
a) eine Einheit zur Zubereitung von mindestens einem Getränk;
b) einen Getränkeauslauf, der fluidisch mit der Einheit verbunden ist;
c) einen Drehteller mit mehreren Sektoren zum Abstellen von mindestens einem Getränkebehälter, wobei der Drehteller einen unter dem Getränkeauslauf angeordneten Bezugssektor und mindestens einen Außensektor aufweist;
d) eine Anzeigeeinheit;
e) eine Steuereinheit;
dadurch gekennzeichnet, dass
die Anzeigeeinheit konfiguriert ist, den Drehteller und eine gegenwärtige Position der Sektoren des Drehtellers darzustellen, und
die Steuereinheit konfiguriert ist,
nach einer Auswahl von mindestens einem Getränk an dem Getränkebereiter durch einen Benutzer die Anzeigeeinheit zu veranlassen, einen Getränkebehälter, der für das mindestens eine ausgewählte Getränk geeignet ist, in einem Außensektor des Drehtellers darzustellen, und
nach einem Befehl zur Zubereitung des mindestens einen ausgewählten Getränks, den Drehteller zu veranlassen, sich so zu drehen, dass der Außensektor die Position des Bezugssektors einnimmt, die Anzeigeeinheit zu veranlassen, die Änderung der Position des Drehtellers und des Getränkebehälters darzustellen, und den Getränkebereiter zu veranlassen, das mindestens eine ausgewählte Getränk durch die Einheit zuzubereiten und über den Getränkeauslauf in den im Bezugssektor befindlichen Getränkebehälter auszugeben.

Der erfindungsgemäße Getränkebereiter ermöglicht eine weniger fehleranfällige und schnellere Zubereitung von Getränken in den richtigen Getränkebehälter. Der Grund hierfür ist, dass ein Benutzer des Getränkebereiters keine Überlegung mehr anstellen muss, welcher Getränkebehälter für welches ausgewählte Getränk der richtige Getränkebehälter ist. Die erforderliche Zuordnung von ausgewähltem Getränk zum erforderlichem Getränkebehälter wird hier vom Getränkebereiter selbst vorgenommen und der Getränkebereiter stellt über seine Anzeigeeinheit den jeweils für ein ausgewähltes Getränk erforderlichen Getränkebehälter dar. Der Benutzer sieht somit unmittelbar auf der Anzeigeeinheit des Getränkebereiters, welchen bzw. welche Getränkebehälter er auf dem Drehteller des Getränkebereiters bereitstellen muss. Unnötige Überlegungszeit für den Benutzer fällt somit weg. Daher wird die Bedienung des Getränkebereiters für den Benutzer einfacher und schneller und die Anfälligkeit für Bedienfehler ist verringert. Folglich können über den erfindungsgemäßen Getränkebereiter Getränke (die z.B. in einer Jobliste an Getränken zur Zubereitung bestimmt sind) auf einfachere, schnellere und fehlerfreiere Art und Weise bereitgestellt werden als mit bekannten Getränkebereitern.

Der erfindungsgemäße Getränkebereiter kann dadurch gekennzeichnet sein, dass die Steuereinheit konfiguriert ist, nach einer Auswahl von mindestens zwei, bevorzugt mindestens drei, besonders bevorzugt mindestens vier, ganz besonders bevorzugt mindestens fünf, insbesondere mindestens sechs, Getränken durch einen Benutzer, optional nach einer Auswahl bis zu einer maximalen, in den Außensektoren des Drehtellers darstellbaren Menge an Getränken, die Anzeigeeinheit zu veranlassen, einen Getränkebehälter, der für das jeweilige ausgewählte Getränk geeignet ist, in je einem Außensektor des Drehtellers darzustellen. Je mehr Getränke ausgewählt werden, desto größer wird der oben beschriebene Vorteil des erfindungsgemäßen Getränkebereiters für den Benutzer, denn je mehr Getränkebehälter auf dem Drehteller bereitgestellt werden müssen, desto mehr Zeit wird bei Getränkebereitern aus dem Stand der Technik beansprucht, um den richtigen Getränkebehälter zu finden und desto höher ist hierbei die Anfälligkeit, bei der Auswahl einen Fehler zu machen. Dies wird durch den erfindungsgemäßen Getränkebereiter verhindert.

Die Steuereinheit kann konfiguriert sein, nach einem Befehl zur Zubereitung der mindestens zwei, bevorzugt mindestens drei, besonders bevorzugt mindestens vier, ganz besonders bevorzugt mindestens fünf, insbesondere mindestens sechs, ausgewählten Getränke, optional nach einer Auswahl einer maximal in den Außensektoren des Drehtellers darstellbaren Menge an Getränken, den Drehteller zu veranlassen, sich so zu drehen, dass die jeweiligen Außensektoren nacheinander die Position des Bezugssektors einnehmen, und die Anzeigeeinheit zu veranlassen, die Änderungen der Positionen der Getränkebehälter darzustellen, und den Getränkebereiter zu veranlassen, die ausgewählten Getränke nacheinander über die Einheit zuzubereiten und über den Getränkeauslauf in den jeweiligen im Bezugssektor befindlichen Getränkebehälter auszugeben. In dieser Ausgestaltungsform wird eine Liste an Getränken (eine sog. "Jobliste") sequentiell, d.h. nacheinander vom Getränkbereiter zubereitet, wobei der Benutzer die sequentielle Zubereitung in Echtzeit an der Anzeigeeinheit des Getränkebereiters verfolgen kann. Falls nötig kann der Benutzer auch während der sequentiellen Zubereitung noch einen Getränkebehälter in einem Außensektor des Drehtellers austauschen, wenn er diesen als falsch erkennt, d.h. wenn er erkennt, dass der auf dem Drehteller im Außensektor abgestellte Getränkebehälter nicht dem erforderlichen, auf der Anzeigeeinheit des Getränkebereiters dargestellten Getränkebehälter entspricht. Ein Erkennen eines falschen Getränkebehälters während der Zubereitung ist dagegen bei bekannten Getränkebereitern erschwert, da diese die erforderlichen Getränkebehälter nicht auf ihrer Anzeigeeinheit darstellen.

Die Anzeigeeinheit des Getränkebereiters, und/oder eine mit dem Getränkebereiter drahtlos oder drahtgebunden verbundene Bedieneinheit, kann/können konfiguriert sein, eine Auswahl von mindestens einem Getränk durch einen Benutzer an die Steuereinheit zu übermitteln. Bevorzugt wird die Auswahl ermöglicht über eine Anzeige des mindestens einen Getränks mittels einer Darstellung ausgewählt aus der Gruppe bestehend aus Text, Symbol, Piktogramm und Kombinationen hiervon.

Ferner ist bevorzugt, dass die Auswahl ermöglicht wird über ein Berühren des mindestens einen Getränks und/oder Ziehen des mindestens einen Getränks in einen Auswahlbereich der Anzeigeneinheit und/oder Bedieneinheit. Bevorzugt ist die Steuereinheit konfiguriert, im Falle einer Auswahl von mehreren Getränken die Getränke nebeneinander in dem Auswahlbereich auf der Anzeigeeinheit und/oder der Bedieneinheit darzustellen, wobei es sich bei dem Auswahlbereich besonders bevorzugt um eine Darstellung des Drehtellers handelt. Die Steuereinheit ist ganz besonders bevorzugt dazu konfiguriert, die Getränke auf fortlaufenden, nebeneinander befindlichen Außensektoren des Drehtellers darzustellen, insbesondere beginnend mit dem Außensektor, der sich unmittelbar neben dem Bezugssektor befindet. Die Übermittlung der Auswahl über die von der Anzeigeeinheit separaten Bedieneinheit hat den Vorteil, dass die Eingabe eines gewünschten Getränks auch an einer Stelle erfolgen kann, die vom Getränkebereiter weit entfernt ist (z.B. eine Kasse in einem Restaurant oder Café). Die Auswahl über das Ziehen des Getränks in einen Auswahlbereich hat den Vorteil, dass auf schnelle Art und Weise verschiedene Joblisten erstellt werden können und eine erstellte Jobliste schnell bearbeitet werden kann (z.B. die Zubereitungsreihenfolge der Getränke schnell verändert werden kann). Diese Vorteile ergeben sich insbesondere dann, wenn der Auswahlbereich die Darstellung des Drehtellers auf der Anzeigeeinheit enthält oder daraus besteht.

Zudem ist bevorzugt, dass die Auswahl ermöglicht wird über ein Berühren des mindestens einen Getränks und Ziehen des mindestens einen Getränks in einem Auswahlbereich der Anzeigeneinheit und/oder Bedieneinheit, um die Position des mindestens einen Getränks im Auswahlbereich zu verändern, wobei es sich bei dem Auswahlbereich besonders bevorzugt um eine Darstellung des Drehtellers handelt, und die Steuereinheit ganz besonders bevorzugt dazu konfiguriert ist, nach einem Berühren und Ziehen von einem Getränk von einem ersten Außensektor des Drehtellers in einen zweiten Außensektor des Drehtellers das Getränk in dem ersten Außensektor des Drehtellers nicht mehr darzustellen und in dem zweiten Außensektor des Drehtellers darzustellen. Dies hat den Vorteil, dass auf schnelle Art und Weise eine bestehende Jobliste verändert werden kann, d.h. die Zubereitungsreihenfolge der Getränke schnell verändert werden kann. Die Veränderung der Zubereitungsreihenfolge direkt auf dem dargestellten Drehteller hat den Vorteil, dass der Benutzer anstelle einer Veränderung einer Reihenfolge von Getränken in einer Getränkeliste direkt eine Veränderung einer Reihenfolge von dargestellten Getränkebehältern auf dem dargestellten Drehteller vornimmt und somit die Aufmerksamkeit des Benutzers bereits auf den für die Zubereitung der Getränke nötigen Getränkebehältern und deren Platzierung auf dem Drehteller liegt. Die eigentliche Platzierung der erforderlichen Getränkebehälter ist damit für den Benutzer noch schneller durchführbar.

Die die Anzeigeeinheit des Getränkebereiters, und/oder eine mit dem Getränkebereiter drahtlos oder drahtgebunden verbundene Bedieneinheit, kann/können konfiguriert sein, eine Bestellnummer von mindestens einem Getränk durch einen Benutzer entgegen zu nehmen und an die Steuereinheit zu übermitteln.

Ferner kann die Anzeigeeinheit des Getränkebereiters, und/oder eine mit dem Getränkebereiter drahtlos oder drahtgebunden verbundene Bedieneinheit, konfiguriert sein, eine Auswahl von mindestens einem Getränk durch einen Benutzer darzustellen, bevorzugt zusammen mit einer dem mindestens einen Getränk zugeordneten Bestellnummer. Bevorzugt erfolgt die Darstellung bei einem Sektor des Drehtellers, in welchem sich der Getränkebehälter für das mindestens eine Getränk auf dem Drehteller des Getränkebereiters befindet und/oder in welchem der Getränkebehälter für das mindestens eine Getränk auf dem auf der Anzeigeeinheit angezeigten Drehteller dargestellt wird. Hierbei ist die Steuereinheit bevorzugt konfiguriert, die Darstellung der Bestellnummer an dem Drehteller des Getränkebereites und/oder auf dem auf der Anzeigeeinheit angezeigten Drehteller zu veranlassen. Der Vorteil an der Darstellung der Bestellnummer bei dem zugehörigen Getränkebehälter ist, dass es für den Benutzer sehr einfach wird, die von einer bestimmten Bestellnummer erfassten Getränkebehälter zu erkennen und diese schnell von dem Drehteller zu nehmen. Falls der Benutzer die Getränke nicht selbst konsumiert, kann er diese somit auch schnell zu einem Konsumenten zu bringen, der die Getränke unter der Bestellnummer bestellt hat. Auch hier ergibt sich ein entscheidender Vorteil des erfindungsgemäßen Getränkebereiters: Da die Bestellnummer direkt einem Getränkebehälter zugeordnet wird, muss der Benutzer nicht erst überlegen, welcher Getränkebehälter auf dem Drehteller nun einem Getränk der Bestellnummer entspricht. Findet sich beispielsweise unter einer konkreten Bestellnummer ein Cappuccino auf der Anzeige einer Kasse bzw. eines Kassenzettels, muss der Benutzer (hier: eine Servicekraft eines Restaurants oder Cafés) nicht überlegen, welche Tasse, die er auf dem Drehteller sieht, nun eine Cappuccino-Tasse oder vielleicht eine andere Tasse ist. Er kann einfach die Tasse nehmen, bei welcher die Bestellnummer angezeigt ist, da es sich hierbei um die korrekte Cappuccino-Tasse handelt. Bestellungen über Bestellnummer können somit deutlich einfacher, schneller und fehlerfreier abgearbeitet werden.

Zudem kann die Anzeigeeinheit des Getränkebereiters, und/oder eine mit dem Getränkebereiter drahtlos oder drahtgebunden verbundene Bedieneinheit, konfiguriert sein, im Falle einer Auswahl von mehreren Getränken durch einen Benutzer die ausgewählten Getränke in einer Liste darzustellen, bevorzugt zusammen mit einer den Getränken zugeordneten Bestellnummer, wobei die Liste besonders bevorzugt die Reihenfolge einer Zubereitung der ausgewählten Getränke festlegt und die Reihenfolge insbesondere durch eine Eingabe des Benutzer veränderbar ist. Diese Konfiguration hat den Vorteil, dass ein Benutzer bei einer Jobliste schnell in die Zubereitungsreihenfolge eingreifen kann. Dies ist dann ein Vorteil, wenn erst nach Aufnahme einer Bestellung der Wunsch nach einer zügigeren Bereitstellung einzelner Getränke der Jobliste (z.B. von einem Kunden eines Restaurants oder Cafés) gefordert wird. Diesem Wunsch kann somit einfach und schnell entsprochen werden.

Die Anzeigeeinheit des Getränkebereiters, und/oder eine mit dem Getränkebereiter drahtlos oder drahtgebunden verbundene Bedieneinheit, kann/können konfiguriert sein, einen Status des Bezugssektors und/oder von mindestens einem Außensektor des Drehtellers anzuzeigen, wobei der Status bevorzugt über eine Darstellung ausgewählt aus der Gruppe bestehend aus Text, Symbol, Piktogramm, Farbe und Kombinationen hiervon angezeigt wird. Besonders bevorzugt ist der Status des Bezugssektors und/oder mindestens einen Außensektors ausgewählt ist aus der Gruppe bestehend aus
i) benötigter, aber fehlender Getränkebehälter,
ii) falscher Getränkebehälter,
iii) korrekter und leerer Getränkebehälter, bei dem die Zubereitung noch nicht gestartet wurde,
iv) korrekter Getränkebehälter, bei dem die Zubereitung gestartet wurde,
v) korrekter, mit Getränk befüllter Getränkebehälter, und noch unfertige Getränkezubereitung und
vi) korrekter, mit Getränk befüllter Getränkebehälter und fertige Getränkezubereitung.

Der Vorteil an der Statusanzeige ist, dass einem Benutzer neben der Anzeige des Drehtellers mit seinen einzelnen Sektoren und den auf dem Drehteller zu platzierenden Getränkebehälter über die Anzeigeeinheit ein zusätzliches optisches Signal zur Verfügung gestellt wird, das ihn über den Status eines Getränks während eines Zubereitungsvorgangs informiert wird. Der Benutzer erkennt somit noch schneller, ob er für die Bereitstellung des fertigen Getränks noch tätig werden muss (betrifft Status i), ii) und v)) bzw. ob er nicht mehr tätig werden muss (betrifft Status iii) und vi)). Diese optische Information erlaubt es dem Benutzer, den Getränkebereiter schneller, einfacher und fehlerfreier zu bedienen. Durch die optische Information des Status iii) bzw. iv) bekommt der Benutzer beispielsweise die Information, dass er zunächst nichts tun muss, d.h. seine Zeit für andere Tätigkeiten nutzen kann, da der Getränkebereiter eine bestimmte Zeit brauchen wird, um den korrekten Getränkebehälter mit dem ausgewählten Getränk zu befüllen. Der Betrieb gestaltet sich somit ökonomischer.

Beispielsweise kann der Status i) (benötigter, aber fehlender Getränkebehälter in Bezugssektor und/oder Außensektor) über eine farbliche Darstellung angezeigt werden, bevorzugt eine blau blinkende Darstellung. Die farbliche Darstellung kann ausgewählt sein aus der Gruppe bestehend aus Text, Symbol, Piktogramm, Leuchtfeld und Kombinationen hiervon und ist insbesondere ein blau blinkender Kreis unterhalb des als geeignet dargestellten Getränkebehälters.

Beispielsweise kann der Status ii) (falscher Getränkebehälter in Bezugssektor und/oder Außensektor) über eine farbliche Darstellung angezeigt werden, bevorzugt eine rot blinkende Darstellung. Die farbliche Darstellung kann ausgewählt sein aus der Gruppe bestehend aus Text, Symbol, Piktogramm, Leuchtfeld und Kombinationen hiervon und ist insbesondere ein rot blinkender Kreis unterhalb des als geeignet dargestellten Getränkebehälters.

Beispielsweise kann der Status iii) (korrekter und leerer Getränkebehälter in Bezugssektor und/oder Außensektor, bei dem die Zubereitung noch nicht gestartet wurde) über eine farbliche Darstellung angezeigt werden, bevorzugt eine blaue Darstellung. Die farbliche Darstellung kann ausgewählt sein aus der Gruppe bestehend aus Text, Symbol, Piktogramm, Leuchtfeld und Kombinationen hiervon und ist insbesondere ein blauer Kreis unterhalb des als geeignet dargestellten Getränkebehälters.

Beispielsweise kann der Status iv) (korrekter Getränkebehälter in Bezugssektor und/oder Außensektor, bei dem die Zubereitung gestartet wurde,) über eine farbliche Darstellung angezeigt werden, bevorzugt eine rote Darstellung. Die farbliche Darstellung kann ausgewählt sein aus der Gruppe bestehend aus Text, Symbol, Piktogramm, Leuchtfeld und Kombinationen hiervon und ist insbesondere ein roter Kreis unterhalb des als geeignet dargestellten Getränkebehälters

Beispielsweise kann der Status v) (korrekter, mit Getränk befüllter Getränkebehälter in Bezugssektor und/oder Außensektor und noch unfertige Getränkezubereitung) über eine farbliche Darstellung angezeigt werden, bevorzugt eine gelbe Darstellung. Die farbliche Darstellung kann ausgewählt sein aus der Gruppe bestehend aus Text, Symbol, Piktogramm, Leuchtfeld und Kombinationen hiervon und ist insbesondere ein gelber Kreis unterhalb des als geeignet dargestellten Getränkebehälters.

Beispielsweise kann der Status vi) (korrekter, mit Getränk befüllter Getränkebehälter in Bezugssektor und/oder Außensektor und fertige Getränkezubereitung) über eine farbliche Darstellung angezeigt werden, bevorzugt eine grüne Darstellung. Die farbliche Darstellung kann ausgewählt sein aus der Gruppe bestehend aus Text, Symbol, Piktogramm, Leuchtfeld und Kombinationen hiervon und ist insbesondere ein grüner Kreis unterhalb des als geeignet dargestellten Getränkebehälters.

Die Anzeigeeinheit des Getränkebereiters, und/oder eine mit dem Getränkebereiter drahtlos oder drahtgebunden verbundene Bedieneinheit, kann/können konfiguriert sein, einen Befehl zur Zubereitung des mindestens einen ausgewählten Getränks von einem Benutzer entgegen zu nehmen, bevorzugt über eine Berührung einer Darstellung, besonders bevorzugt über eine Darstellung ausgewählt aus der Gruppe bestehend aus Text, Symbol, Piktogramm und Kombinationen hiervon, und den Befehl zur Zubereitung des mindestens einen ausgewählten Getränks an die Steuereinheit zu übermitteln. In dieser Ausgestaltungsform wird der Zubereitungsbefehl von dem Benutzer manuell gegeben, was dem Benutzer mehr Kontrolle über den Startzeitpunkt der Zubereitung gibt.

Ferner kann/können die Anzeigeeinheit des Getränkebereiters, und/oder eine mit dem Getränkebereiter drahtlos oder drahtgebunden verbundene Bedieneinheit, konfiguriert sein, eine Eingabe durch einen Benutzer zu ermöglichen, einen im Außensektor oder Bezugssektor dargestellten Getränkebehälter nicht mehr über die Anzeigeeinheit und/oder Bedieneinheit darzustellen, und eine erfolgte Eingabe an die Steuereinheit zu übermitteln, wobei die Eingabe bevorzugt über eine Darstellung ermöglicht wird, insbesondere eine Darstellung ausgewählt aus der Gruppe bestehend aus Text, Symbol, Piktogramm und Kombinationen hiervon. Alternativ oder zusätzlich hierzu kann die Steuereinheit konfiguriert sein, Signale von mindestens einem Sensor am Drehteller (z.B. ein Gewichtssensor) zu empfangen und basierend auf dem Signal zu entscheiden, ob ein im Außensektor oder Bezugssektor dargestellter Getränkebehälter weiterhin über die Anzeigeeinheit und/oder Bedieneinheit dargestellt wird oder nicht. Diese Ausgestaltungsform beschreibt Varianten der Ausblendung von Getränkebehältern, nachdem diese von dem Getränkebereiter befüllt wurden (d.h. z.B. den Bezugssektor verlassen haben und sich nun in einem Außensektor des Drehtellers befinden) und dann von dem Benutzer von dem Drehteller des Getränkebereiters entnommen wurden. Die Eingabe (Rückmeldung) der Entnahme des zubereiteten Getränks kann manuell durch den Benutzer erfolgen (z.B. durch ein Antippen des entsprechenden Getränkebehälters auf der Anzeigeeinheit) oder kann automatisch durch den Getränkebereiter erfolgen (z.B. über einen Sensor, der das Entnehmen des befüllten Getränkebehälters von dem Drehteller detektiert).

Die Sektoren des Drehtellers des Getränkebereiters können mindestens einen Sensor zur Erfassung eines abgestellten Getränkebehälters aufweisen, wobei der mindestens eine Sensor eine kommunikative Verbindung zur Steuereinheit aufweist. Bevorzugt ist der mindestens eine Sensor ausgewählt ist aus der Gruppe bestehend aus Gewichtssensor, optischer Sensor, magnetischer Sensor, elektromagnetischer Sensor, bildgebender Sensor und Kombinationen hiervon, besonders bevorzugt ausgewählt aus der Gruppe bestehend aus Gewichtssensor, optischer Sensor und Kombinationen hiervon. Insbesondere ist der mindestens eine Sensor ein Gewichtssensor. Beispielsweise kann über einen Gewichtssensor (z.B. eine Wägezelle) eine Erkennung eines Getränkebehälters (z.B. eine Tassenerkennung) über sein Gewicht erfolgen. Grundsätzlich kann über einen solchen Gewichtssensor auch zwischen jeweils leeren und vollen Getränkebehälter unterschieden werden, sodass der Gewichtssensor eine Rückmeldung über einen erfolgreichen Bezug von Getränk an die Steuereinheit des Getränkebereiters übermitteln kann. Ferner kann eine Entnahme eines befüllten Getränkebehälters vom Drehteller an die Steuereinheit übermittelt werden. Zudem kann ein auf dem Drehteller abgestellter, falscher Getränkebehälter detektiert werden diese Information an die Steuereinheit kommuniziert werden. Im Falle eines falschen Getränkebehälters (z.B. eine falsche Tasse) auf einem Sektor des Drehtellers kann von dem Getränkebereiter ein Warnhinweis an einen Benutzer des Getränkebereiters ausgegeben werden, sodass der Benutzer schnell eine Korrektur, d.h. einen Austausch des falschen Getränkebehälters gegen den korrekten Getränkebehälter, vornehmen kann.

Die Steuereinheit kann konfiguriert sein, nach einem Erkennen von mindestens zwei vertauschten Getränkebehältern auf mindestens zwei Außensektoren des Drehtellers (z.B. über mindestens einen Sensor in den Außensektoren) den Drehteller so anzusteuern, dass eine vorgegebene Reihenfolge der Getränkezubereitung eingehalten wird. Hierfür kann beispielsweise ein weiter vom Bezugssektor entfernter Außensektor (der fälschlicherweise den Getränkebehälter für das erste zuzubereitende Getränk enthält) zuerst zum Bezugssektor gefahren (d.h. gedreht) werden und anschließend ein ursprünglich näherer Außensektor (der fälschlicherweise den Getränkebehälter für das zweite zuzubereitende Getränk enthält) zum Bezugssektor gefahren (d.h. gedreht) werden. Diese Konfiguration der Steuereinheit kann entsprechend für mehrere vertauschte Getränkebehälter auf den Außensektoren des Drehtellers gelten. Vorteil an dieser Variante ist, dass ein Fehler eines Benutzers korrigiert wird, wenn zwar die richtigen Getränkebereiter (z.B. für die Abarbeitung einer Jobliste) auf dem Drehteller abgestellt wurden, aber deren Reihenfolge vertauscht wurde, sodass die Zubereitungsreihenfolge (z.B. festgelegt in einer Jobliste) nicht stimmen würde. Diese Korrektur kann dann durch gezieltes Ansteuern des Drehtellers schneller korrigiert werden als eine manuelle Korrektur der Reihenfolge durch einen Benutzer, was den Getränkebezug für den Benutzer schneller und angenehmer macht und dem Benutzer mehr Zeit für andere Tätigkeiten zur Verfügung steht.

Ferner kann die Steuereinheit (z.B. in einer alternativen Einstellung) konfiguriert sein, nach einem Erkennen von mindestens zwei vertauschten Getränkebehältern auf mindestens zwei Außensektoren des Drehtellers (z.B. über mindestens einen Sensor in den Außensektoren) die Jobliste entsprechend der Reihenfolge der mindestens zwei vertauschten Getränkebehälter anzupassen. Vorteil hierbei wäre, dass die Geschwindigkeit der Befüllung der auf dem Drehteller befindlichen Getränkebehälter schneller von dem Getränkebereiter abgearbeitet werden kann, da sich der Drehteller um eine minimale Strecke bewegen muss. Diese Variante kann dann vorteilhaft sein, wenn eine große Menge an Getränken unterschiedlicher Bestellnummern in möglichst kurzer Zeit bereitgestellt werden muss und die Reihenfolge der Zubereitung einzelner Bestellnummern in der Wichtigkeit gegenüber der Schnelligkeit der Zubereitung aller Getränke der unterschiedlichen Bestellnummern zurücktritt.

In einer bevorzugten Ausgestaltungsform ist die Steuereinheit konfiguriert, wenn der mindestens eine Sensor keinen oder einen ungeeigneter Getränkebehälter in dem Außensektor detektiert, den Drehteller nach Erhalt eines Befehls zur Zubereitung des mindestens einen ausgewählten Getränks nicht zu veranlassen, sich so zu drehen, dass der Außensektor die Position des Bezugssektors einnimmt. Diese Ausgestaltungsform kann den Getränkebereiter vor einer Ausgabe eines bestimmten Getränks in einen falschen Getränkebehälter schützen und damit Zeit und Ressourcen einsparen.

In einer weiteren bevorzugten Ausgestaltungsform ist die Steuereinheit konfiguriert, wenn der mindestens eine Sensor einen geeigneten Getränkebehälter in dem Außensektor detektiert, den Drehteller nach Erhalt eines Befehls zur Zubereitung des mindestens einen ausgewählten Getränks zu veranlassen, sich so zu drehen, dass der Außensektor die Position des Bezugssektors einnimmt. Optional kann diese Steuerung auch in Abwesenheit eines durch einen Benutzer eingegebenen Befehls zur Zubereitung des mindestens einen ausgewählten Getränks geschehen, d.h. der Befehl zur Zubereitung des mindestens einen ausgewählten Getränks wird hierbei von der Steuereinheit selbst (d.h. automatisch) generiert, sobald ein geeigneter Getränkebehälter auf einem für den Getränkebehälter vorgesehenen Außensektor platziert wurde. Vorteil hierbei ist, dass kein manueller Befehl zum Start der Zubereitung mehr vom Benutzer gegeben werden muss. Sobald der mindestens eine Sensor (oder mehrere Sensoren) registrieren, dass der (oder die) korrekten Getränkebehälter auf dem Drehteller platziert wurden, startet die Zubereitung. Der Benutzer hat somit mehr Zeit zur Verfügung, da ihm die Veranlassung des Startbefehls abgenommen wird.

Die Sektoren des Drehtellers des Getränkebereiters können (jeweils) ein Gitter aufweisen, das sich zum Abstellen von Getränkebehältern eignet, wobei unter dem Gitter bevorzugt eine Abtropfschale angeordnet ist. Vorteil hierbei ist, dass Flüssigkeit, die den Getränkebehälter verlässt oder die versehentlich vom Getränkeauslauf zumindest teilweise neben den Getränkebehälter gelangt, das Gitter passiert und aufgefangen wird. Es kommt somit zu keiner Verunreinigung der Umgebung des Getränkebereiters mit dieser Flüssigkeit, da sie im Getränkebereiter verbleibt (d.h. von dem Drehteller gesammelt wird).

Ferner können die Sektoren des Drehtellers des Getränkebereiters (jeweils) eine Sektorenanzeigeeinheit aufweisen, die dazu konfiguriert ist, eine Information zum jeweiligen Sektor anzuzeigen. Bevorzugt erfolgt die Anzeige über eine Darstellung ausgewählt aus der Gruppe bestehend aus Text, Symbol, Piktogramm, Farbe und Kombinationen hiervon. Insbesondere entspricht die angezeigte Information mindestens einer Information (d.h. einem Status) eines jeweiligen Sektors, die über die Anzeigeeinheit des Getränkebereiters, und/oder einer mit dem Getränkebereiter drahtlos oder drahtgebunden verbundenen Bedieneinheit, angezeigt wird. Vorteil an dieser Ausgestaltungsform ist, dass der Benutzer Informationen zum Status eines jeweiligen Sektors am Drehteller selbst bekommt, d.h. ein Blick auf den Drehteller ist ausreichend, um herauszufinden, ob noch etwas getan werden muss oder nicht. Dies macht die Bedienung des Getränkebereiters einfacher, schneller und weniger fehleranfällig.

Die Einheit zur Zubereitung von mindestens einem Getränk kann eine Einheit zur Zubereitung von mindestens einem Getränk ausgewählt aus der Gruppe bestehend aus Kaffee, Tee, Milch, Milchschaum und Kombinationen hiervon sein. Bevorzugt ist die Einheit zur Zubereitung von mindestens einem Getränk ausgewählt aus der Gruppe bestehend aus Brüheinheit, Milchschäumer und Kombinationen hiervon. Insbesondere handelt es sich bei dem Getränkebereiter um einen Kaffeebereiter (Kaffeevollautomat).

Der Getränkeauslauf des Getränkebereiters kann in Richtung Drehteller beweglich sein. Vorteil hierbei ist, dass der Getränkeauslauf vor Ausgabe eines Getränks bis knapp über den Rand eines Getränkebehälters gefahren werden kann. Hierdurch wird die Gefahr reduziert, dass beim Bezug Getränkespritzer entstehen, die das Innere des Getränkebehälters verlassen.

Die Anzeigeeinheit, und/oder eine mit dem Getränkebereiter drahtlos oder drahtgebunden verbundene Bedieneinheit, kann/können einen berührungsempfindlichen Bildschirm enthalten oder daraus bestehen. Der berührungsempfindliche Bildschirm (engl. "touchscreen") hat den Vorteil, dass er nicht nur eine Anzeigeeinheit, sondern auch eine Bedieneinheit ist, d.h. nicht nur Informationen darstellen kann, sondern auch Befehle von einem Benutzer entgegen nehmen kann und diese an die Steuereinheit weiterleiten kann.

Er wird ferner ein Verfahren zur Zubereitung mindestens eines Getränks vorgestellt, umfassend die Schritte
a) Nach einer Auswahl von mindestens einem Getränk an einem Getränkebereiter durch einen Benutzer:
   Veranlassen einer Anzeigeeinheit des Getränkebereiters, einen Getränkebehälter, der für das mindestens eine ausgewählte Getränk geeignet ist, in einem Außensektor eines Drehtellers des Getränkebereiters, der von der Anzeigeneinheit angezeigt wird, darzustellen;
b) Nach einem Befehl zur Zubereitung des mindestens einen ausgewählten Getränks:
   Veranlassen des Drehtellers, sich so zu drehen, dass der Außensektor des Drehtellers eine Position eines Bezugssektors des Drehtellers einnimmt, wobei der Bezugssektor des Drehtellers unter einem Getränkeauslauf des Getränkebereiters angeordnet ist;
   Veranlassen der Anzeigeeinheit, die Änderung der Position des Drehtellers und des Getränkebehälters darzustellen;
   Veranlassen des Getränkebereiters, das mindestens eine ausgewählte Getränk durch eine Einheit des Getränkebereiters zuzubereiten und über einen fluidisch mit der Einheit verbundenen Getränkeauslauf in den im Bezugssektor befindlichen Getränkebehälter auszugeben,
wobei die Schritte in a) und b) von einer Steuereinheit des Getränkebereiters veranlasst werden.

Das erfindungsgemäße Verfahren kann dadurch gekennzeichnet sein, dass in dem Verfahren ein erfindungsgemäßer Getränkebereiter verwendet wird.

Anhand der nachfolgenden Figuren und Beispiele soll der erfindungsgemäße Gegenstand näher erläutert werden, ohne diesen auf die hier dargestellten, spezifischen Ausgestaltungsformen einschränken zu wollen.

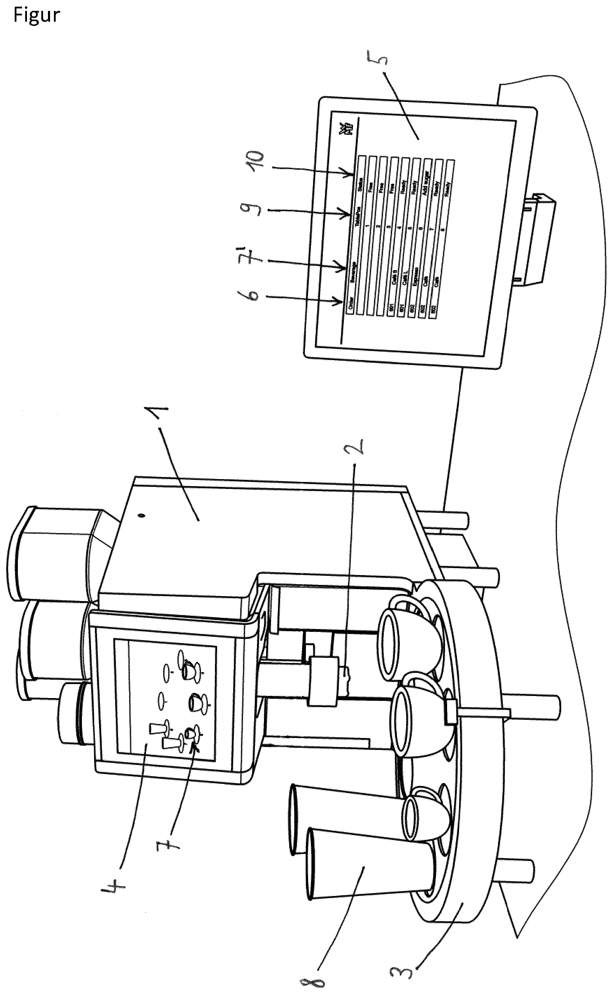

Die Figur zeigt eine schematische Darstellung eines erfindungsgemäßen Gertränkebereiters 1. Der Getränkebereiter 1 enthält eine Einheit zur Zubereitung von mindestens einem Getränk (Einheit ist nicht dargestellt, hier z.B. eine Brüheinheit zur Zubereitung von Kaffee), einen Getränkeauslauf 2, der fluidisch mit der Einheit verbunden ist, einen Drehteller 3 mit mehreren Sektoren zum Abstellen von mindestens einem Getränkebehälter 8 (Unterteilung der Sektoren ist hier nicht dargestellt). Der Drehteller 3 weist acht Stellplätze für jeweils einen Getränkebehälter 8 pro Stellplatz und damit acht Sektoren für jeweils einen Getränkebehälter 8 pro Sektor auf. Jeder der acht Sektoren erstreckt sich radial vom geometrischen Mittelpunkt des Drehtellers 3 nach außen und bietet jeweils einem einzelnen Getränkebehälter 8 eine Abstellfläche. Der Drehteller 3 weist einen unter dem Getränkeauslauf 2 angeordneten Bezugssektor und in diesem Fall sieben Außensektoren auf (Sektoren links und rechts vom Bezugssektor). Ferner weist der Getränkebereiter 1 eine Anzeigeeinheit 4 und eine Steuereinheit (nicht dargestellt) auf. Der hier dargestellte Getränkebereiter 1 enthält zudem eine Bedieneinheit 5, auf der unter anderem eine Auswahl und eine Darstellung von mindestens einem Getränk 7' unter einer zugehörigen Bestellnummer 6 erfolgen kann (z.B. über Berühren der Bedieneinheit 5). Ein an der Bedieneinheit 5 ausgewähltes Getränk 7' kann auch an der Anzeigeeinheit 4 als ausgewähltes Getränk 7 dargestellt werden. Zudem kann ein ausgewähltes Getränk 7, 7' an der Bedieneinheit 5 und/oder Anzeigeeinheit 4 wieder abgewählt bzw. zu einem anderen Getränk 7, 7' verändert werden (z.B. über Berühren der Anzeigeeinheit 4). Die Bedieneinheit 5 steht mit dem Getränkebereiter 1 in kommunikativer Verbindung und ist somit ein Teil des Getränkebereiters 1. Die Bedieneinheit 5 kann zudem die Positionsnummer 9 und den Status 10 von jedem Sektor des Drehtellers 3 anzeigen.

### Beispiel 1- Verwendung eines erfindungsgemäßen Getränkebereiters

Ein Benutzer des Getränkebereiters kann über die Anzeigeeinheit, die hier als Touchscreen ausgestaltet ist und auch als Bedieneinheit fungiert, eine Jobliste an Getränken erstellen, die sequentiell von dem Getränkebereiter hergestellt werden sollen. Diese Jobliste kann in einem Bildschirmbereich des Touchscreens angezeigt werden. Ferner zeigt die Anzeigeeinheit des Getränkebereiters die für die Herstellung der Getränke nötigen Getränkebehälter in der Zubereitungsreihenfolge in den Außensektoren des über die Anzeigeeinheit visualisierten Drehtellers dar.

Daraufhin sieht der Benutzer (z.B. ein Kellner) die für die Abarbeitung der Jobliste nötigen Getränkebehälter direkt auf der Anzeigeeinheit des Getränkebereiters visualisiert und brauch sich somit keine Gedanke mehr zu machen, wie die jeweiligen nötigen Getränkebehälter für die Abarbeitung der Jobliste aussehen. Er sieht über einen schnellen visuellen Vergleich seiner auf dem Drehteller abgestellten Getränkebehälter mit den auf der Anzeigeeinheit dargestellten, nötigen Getränkebehältern sehr zügig und zuverlässig, ob er einen Fehler gemacht hat oder ob die korrekten Getränkebehälter platziert wurden. Er kann jetzt über die Anzeigeeinheit, d.h. den Touchscreen, einen Befehl zur Zubereitung der Getränke geben.

Der Benutzer musste hierbei keine Zeit mit der Überlegung vergeuden, welcher Getränkebehälter zu welchem Getränk passt und hat auch nicht riskiert, eine fehlerhafte Zuordnung eines Getränks zu einem Getränkebehälter vorzunehmen. Kurz gesagt wurde es dem Benutzer durch den Getränkebereiter ermöglicht, schneller und fehlerloser Getränke aus einer Jobliste an Getränken herstellen zu lassen.

In einer bevorzugten Ausgestaltungsform weist der Drehteller einen Signalgeber, z.B. einen optischen Signalgeber, auf, der dem Benutzer signalisiert, ob ein Getränk aus der Liste fertig zubereitet ist (z.B. Anzeige einer grün visualisierten Information wie beispielsweise ein grünes Leuchtfeld) oder noch einen Zusatz (z.B. Zucker) benötigt (z.B. Anzeige einer gelb visualisierten Information wie beispielsweise ein gelbes Leuchtfeld).

### Beispiel 2 - Verwendung eines weiteren erfindungsgemäßen Getränkebereiters

Dieser erfindungsgemäße Getränkebereiter ist identisch zum Getränkebereiter aus Beispiel 1 bis auf eine Ausnahme: Er weist zusätzlich zur Anzeigeeinheit (z.B. in Form eines Touchscreens) eine separate Bedieneinheit auf. Die separate Bedieneinheit kann ebenfalls als Touchscreen ausgestaltet sein (d.h. auch eine Anzeigeeinheit sein) und ermöglicht dem Benutzer eine Auswahl mindestens eines Getränks oder einer Vielzahl an zuzubereitenden Getränken im Rahmen einer Jobliste an einem Ort, der vom Getränkebereiter weit entfernt ist (z.B. einer Kasse in einem Restaurant). Die Bedieneinheit kann über eine drahtgebundene oder drahtlose Verbindung mit dem Getränkebereiter, insbesondere mit der Steuereinheit des Getränkebereiters, verbunden sein.

Die auf der separaten Bedieneinheit erstellte Jobliste kann auf der Anzeigeeinheit bearbeitet werden, d.h. der Benutzer kann Getränke aus der von der Bedieneinheit übermittelten Jobliste markieren, ihre Reihenfolge verändern und Getränke einfügen und löschen.

Hierbei kann die von der Bedieneinheit übermittelte Jobliste automatisch auf den in der Anzeigeeinheit dargestellten Drehteller übernommen worden sein. Anders ausgedrückt können vor der Bearbeitung der Jobliste die für die Abarbeitung der Jobliste benötigten Getränkebehälter automatisch auf den jeweiligen Sektoren des Drehtellers in der Reihenfolge ihrer Zubereitung (d.h. vom Außensektor neben dem Bezugssektor bis hin zum am weitesten von diesem Außensektor entfernten Außensektor) angezeigt werden. Alternativ ist die Jobliste noch nicht auf den Drehteller, der von der Anzeigeeinheit dargestellt wird, übernommen worden, d.h. ein Benutzer kann die Übernahme der Jobliste, die von der separaten Bedieneinheit übermittelt wurde, manuell vornehmen und auch Änderungen der Jobliste vornehmen. Dies kann beispielsweise über ein Ziehen-und-Fallenlassen (engl.: "drag and drop") von Getränkesymbolen auf einzelne Außensektoren des dargestellten Drehtellers geschehen.

Die Steuereinheit kann konfiguriert sein, während dieser Änderung durch einen Benutzer keine Zubereitung zu starten, d.h. keinen Zubereitungsbefehl anzunehmen.

Während der Zubereitung eines Getränks kann an dem Drehteller in dem Sektor des Getränkebehälters des Getränks eine optische Visualisierung für den Vorgang der Zubereitung des Getränks erfolgen. Beispielsweise kann eine rot visualisierte Information (z.B. ein rotes Leuchtfeld) angezeigt werden. In dem Moment, in dem das Getränk fertig zubereitet ist, kann die rot visualisierte Information in eine grün visualisierte Information wechseln (z.B. kann das Leuchtfeld nun grün leuchten). Ist das Getränk zwar vom Getränkebereiter fertig zubereitet, benötigt aber noch einen (manuellen) Zusatz vom Benutzer des Getränkebereiters (z.B. Zusatz von Zucker) kann anstelle einer grün visualisierten Information (z.B. einem grünen Leuchtfeld) eine gelb visualisierten Information (z.B. ein gelbes Leuchtfeld) angezeigt werden.

Es kann vorgesehen sein, dass ein Entfernen eines zubereiteten Getränks vom Drehteller des Getränkebereiters durch eine Eingabe eines Benutzers (z.B. über die Anzeigeeinheit oder eine Bedieneinheit) bestätigt wird, damit die Anzeige auf der Anzeigeeinheit aktualisiert wird, d.h. der immer noch dargestellte Getränkebehälter für das entnommene Getränk verschwindet, also nicht mehr über die Anzeigeeinheit dargestellt wird.

Alternativ kann der Drehteller mindestens einen Sensor je Sektor aufweisen (z.B. einen Gewichtssensor), der dem Getränkebereiter die Information über das Entfernen eines zubereiteten Getränks automatisch übermittelt. Eine manuelle Eingabe eines Benutzers ist dann nicht mehr erforderlich, um die Darstellung des Drehtellers über die Anzeigeeinheit zu aktualisieren.

Ein nicht mit einem Getränkebehälter besetzter Außensektor, der gemäß einer Jobliste mit einem bestimmten Getränkebehälter besetzt werden soll, kann eine blinkende Farbinformation darstellen (z.B. ein blau blinkendes Leuchtfeld). Sobald ein richtiger (d.h. geeigneter oder angemessener) Getränkebehälter auf dem Außensektor des Drehtellers des Getränkebereiters abgestellt worden ist, kann dieser Außensektor eine nicht-blinkende (d.h. dauerhaft leuchtende) Farbinformation darstellen (z.B. ein dauerhaft blau leuchtendes Leuchtfeld) darstellen.

Der Vorteil an der Visualisierung dieser Informationen über den Drehteller ist, dass ein Benutzer nach einer kurzen Abwesenheit vom Getränkebereiter über einen schnellen Blick auf den Drehteller erkennen kann, welche Getränke bereits fertig zubereitet sind und welche nicht bzw. welche Getränke noch einen Zusatz (z.B. Zucker) benötigen. Dies macht die Bedienung und Bereitstellung der fertigen Getränke deutlich schneller, einfacher und fehlerfreier.

### Bezugszeichenliste

- 1:: Getränkebereiter;
- 2:: Getränkeauslauf;
- 3:: Drehteller;
- 4:: Anzeigeeinheit;
- 5:: Bedieneinheit;
- 6:: Auswahl und Darstellung von Bestellnummer an Bedieneinheit;
- 7:: Auswahl und Darstellung von mindestens einem Getränk an der Anzeigeeinheit;
- 7':: Auswahl und Darstellung von mindestens einem Getränk an der Bedieneinheit;
- 8:: Getränkebehälter;
- 9:: Darstellung von der Positionsnummer auf dem Drehteller, d.h. der Positionsnummer von jedem Sektor des Drehtellers;
- 10:: Darstellung vom Status von jedem Sektor des Drehtellers.

## Patentansprüche

1. Getränkebereiter (1), enthaltend
a) eine Einheit zur Zubereitung von mindestens einem Getränk;
b) einen Getränkeauslauf (2), der fluidisch mit der Einheit verbunden ist;
c) einen Drehteller (3) mit mehreren Sektoren zum Abstellen von mindestens einem Getränkebehälter (8), wobei der Drehteller (3) einen unter dem Getränkeauslauf (2) angeordneten Bezugssektor und mindestens einen Außensektor aufweist;
d) eine Anzeigeeinheit (4);
e) eine Steuereinheit;
**dadurch gekennzeichnet, dass**
die Anzeigeeinheit (4) konfiguriert ist, den Drehteller (3) und eine gegenwärtige Position der Sektoren des Drehtellers (3) darzustellen (9), und
die Steuereinheit konfiguriert ist,
nach einer Auswahl (7, 7') von mindestens einem Getränk an dem Getränkebereiter (1) durch einen Benutzer die Anzeigeeinheit (4) zu veranlassen, einen Getränkebehälter (8), der für das mindestens eine ausgewählte Getränk geeignet ist, in einem Außensektor des Drehtellers (3) darzustellen, und
nach einem Befehl zur Zubereitung des mindestens einen ausgewählten Getränks, den Drehteller (3) zu veranlassen, sich so zu drehen, dass der Außensektor die Position des Bezugssektors einnimmt, die Anzeigeeinheit (4) zu veranlassen, die Änderung der Position des Drehtellers (3) und des Getränkebehälters (8) darzustellen (9), und den Getränkebereiter (1) zu veranlassen, das mindestens eine ausgewählte Getränk durch die Einheit zuzubereiten und über den Getränkeauslauf (2) in den im Bezugssektor befindlichen Getränkebehälter (8) auszugeben.

2. Getränkebereiter (1) gemäß dem vorhergehenden Anspruch, **dadurch gekennzeichnet, dass** die Steuereinheit konfiguriert ist, nach einer Auswahl (7) von mindestens zwei Getränken durch einen Benutzer, die Anzeigeeinheit (4) zu veranlassen, einen Getränkebehälter (8), der für das jeweilige ausgewählte Getränk geeignet ist, in je einem Außensektor des Drehtellers (3) darzustellen.

3. Getränkebereiter (1) gemäß dem vorhergehenden Anspruch, **dadurch gekennzeichnet, dass** die Steuereinheit konfiguriert ist, nach einem Befehl zur Zubereitung der mindestens zwei ausgewählten Getränke, den Drehteller (3) zu veranlassen, sich so zu drehen, dass die jeweiligen Außensektoren nacheinander die Position des Bezugssektors einnehmen, und die Anzeigeeinheit (4) zu veranlassen, die Änderungen der Positionen der Getränkebehälter (8) darzustellen (9), und den Getränkebereiter (1) zu veranlassen, die ausgewählten Getränke nacheinander über die Einheit zuzubereiten und über den Getränkeauslauf (2) in den jeweiligen im Bezugssektor befindlichen Getränkebehälter (8) auszugeben.

4. Getränkebereiter (1) gemäß einem der vorhergehenden Ansprüche, **dadurch gekennzeichnet, dass** die Anzeigeeinheit (4), und/oder eine mit dem Getränkebereiter (1) drahtlos oder drahtgebunden verbundene Bedieneinheit (5), konfiguriert ist, eine Auswahl (7, 7') von mindestens einem Getränk durch einen Benutzer an die Steuereinheit zu übermitteln.

5. Getränkebereiter (1) gemäß einem der vorhergehenden Ansprüche, **dadurch gekennzeichnet, dass** die Anzeigeeinheit (4), und/oder eine mit dem Getränkebereiter (1) drahtlos oder drahtgebunden verbundene Bedieneinheit (5), konfiguriert ist,
i) eine Bestellnummer (6) von mindestens einem Getränk durch einen Benutzer entgegen zu nehmen und an die Steuereinheit zu übermitteln; und/oder
ii) eine Auswahl (7, 7') von mindestens einem Getränk durch einen Benutzer darzustellen; und/oder
iii) im Falle einer Auswahl (7, 7') von mehreren Getränken durch einen Benutzer die ausgewählten Getränke in einer Liste darzustellen.

6. Getränkebereiter (1) gemäß einem der vorhergehenden Ansprüche, **dadurch gekennzeichnet, dass** die Anzeigeeinheit (4), und/oder eine mit dem Getränkebereiter (1) drahtlos oder drahtgebunden verbundene Bedieneinheit (5), konfiguriert ist, einen Status des Bezugssektors und/oder von mindestens einem Außensektor anzuzeigen (10).

7. Getränkebereiter (1) gemäß einem der vorhergehenden Ansprüche, **dadurch gekennzeichnet, dass** die Anzeigeeinheit (4), und/oder eine mit dem Getränkebereiter (1) drahtlos oder drahtgebunden verbundene Bedieneinheit (5), konfiguriert ist, einen Befehl zur Zubereitung des mindestens einen ausgewählten Getränks von einem Benutzer entgegen zu nehmen, und den Befehl zur Zubereitung des mindestens einen ausgewählten Getränks an die Steuereinheit zu übermitteln.

8. Getränkebereiter (1) gemäß einem der vorhergehenden Ansprüche, **dadurch gekennzeichnet, dass** die Anzeigeeinheit (4), und/oder eine mit dem Getränkebereiter (1) drahtlos oder drahtgebunden verbundene Bedieneinheit (5), konfiguriert ist, eine Eingabe durch einen Benutzer zu ermöglichen, einen im Außensektor oder Bezugssektor dargestellten Getränkebehälter (8) nicht mehr über die Anzeigeeinheit (4) und/oder Bedieneinheit (5) darzustellen, und eine erfolgte Eingabe an die Steuereinheit zu übermitteln.

9. Getränkebereiter (1) gemäß einem der vorhergehenden Ansprüche, **dadurch gekennzeichnet, dass** die Sektoren des Drehtellers (3) mindestens einen Sensor zur Erfassung eines abgestellten Getränkebehälters (8) aufweisen und der mindestens eine Sensor eine kommunikative Verbindung zur Steuereinheit aufweist.

10. Getränkebereiter (1) gemäß einem der vorhergehenden Ansprüche, **dadurch gekennzeichnet, dass** die Sektoren des Drehtellers (3)
i) ein Gitter aufweisen, das sich zum Abstellen von Getränkebehältern (8) eignet; und/oder
ii) eine Sektorenanzeigeeinheit aufweisen, die dazu konfiguriert ist, eine Information zum jeweiligen Sektor anzuzeigen.

11. Getränkebereiter (1) gemäß einem der vorhergehenden Ansprüche, **dadurch gekennzeichnet, dass** die Einheit zur Zubereitung von mindestens einem Getränk eine Einheit zur Zubereitung von mindestens einem Getränk ausgewählt aus der Gruppe bestehend aus Kaffee, Tee, Milch, Milchschaum und Kombinationen hiervon ist.

12. Getränkebereiter (1) gemäß einem der vorhergehenden Ansprüche, **dadurch gekennzeichnet, dass** der Getränkeauslauf (2) in Richtung Drehteller (3) beweglich ist.

13. Getränkebereiter (1) gemäß einem der vorhergehenden Ansprüche, **dadurch gekennzeichnet, dass** die Anzeigeeinheit (4), und/oder eine mit dem Getränkebereiter (1) drahtlos oder drahtgebunden verbundene Bedieneinheit (5), einen berührungsempfindlichen Bildschirm enthält oder daraus besteht.

14. Verfahren zur Zubereitung mindestens eines Getränks, umfassend die Schritte
a) Nach einer Auswahl (7, 7') von mindestens einem Getränk an einem Getränkebereiter (1) durch einen Benutzer:
Veranlassen einer Anzeigeeinheit (4) des Getränkebereiters (1), einen Getränkebehälter (8), der für das mindestens eine ausgewählte Getränk geeignet ist, in einem Außensektor eines Drehtellers (3) des Getränkebereiters (1), der von der Anzeigeneinheit angezeigt wird, darzustellen;
b) Nach einem Befehl zur Zubereitung des mindestens einen ausgewählten Getränks:
Veranlassen des Drehtellers (3), sich so zu drehen, dass der Außensektor des Drehtellers (3) eine Position eines Bezugssektors des Drehtellers (3) einnimmt, wobei der Bezugssektor des Drehtellers (3) unter einem Getränkeauslauf (2) des Getränkebereiters (1) angeordnet ist;
Veranlassen der Anzeigeeinheit (4), die Änderung der Position des Drehtellers (3) und des Getränkebehälters (8) darzustellen (9);
Veranlassen des Getränkebereiters (1), das mindestens eine ausgewählte Getränk durch eine Einheit des Getränkebereiters (1) zuzubereiten und über einen fluidisch mit der Einheit verbundenen Getränkeauslauf (2) in den im Bezugssektor befindlichen Getränkebehälter (8) auszugeben,
wobei die Schritte in a) und b) von einer Steuereinheit des Getränkebereiters (1) veranlasst werden.

15. Verfahren gemäß Anspruch 14, **dadurch gekennzeichnet, dass** in dem Verfahren ein Getränkebereiter (1) gemäß einem der Ansprüche 1 bis 13 verwendet wird.

## Claims

1. A beverage maker (1) comprising
a) a unit for preparing at least one beverage;
b) a beverage spout (2) that is fluidically connected to the unit
c) a turntable (3) having a plurality of sectors for placing down at least one beverage container (8), wherein the turntable (3) has a dispensing sector arranged below the beverage spout (2) and at least one outer sector;
d) a display unit (4); and
e) a control unit,
**characterized in that**
the display unit (4) is configured to show (9) the turntable (3) and a current position of the sectors of the turntable (3), and
the control unit is configured to,
after a selection (7, 7') of at least one beverage at the beverage maker (1) by a user, prompt the display unit (4) to show a beverage container (8) that is suitable for the at least one selected beverage in an outer sector of the turntable (3); and
after a command to prepare the at least one selected beverage, prompt the turntable (3) to rotate such that the outer sector adopts the position of the dispensing sector, prompt the display unit (4) to show (9) the change of the position of the turntable (3) and of the beverage container (8), and prompt the beverage maker (1) to prepare the at least one selected beverage by the unit and to dispense it via the beverage spout (2) into the beverage container (8) located in the dispensing sector.

2. A beverage maker (1) in accordance with the preceding claim, **characterized in that** the control unit is configured to, after a selection (7) of at least two beverages by a user, prompt the display unit (4) to show a beverage container (8) that is suitable for a respectively selected beverage in a respective one outer sector of the turntable (3).

3. A beverage maker (1) in accordance with the preceding claim, **characterized in that** the control unit is configured to, after a command to prepare the at least two selected beverages, prompt the turntable (3) to rotate such that the respective outer sectors consecutively adopt the position of the dispensing sector, prompt the display unit (4) to show the changes to the positions of the beverage containers (8), and to prompt the beverage maker (1) to prepare the selected beverages consecutively by the unit and to dispense them via the beverage spout (2) into the respective beverage container (8) located in the dispensing sector.

4. A beverage maker (1) in accordance with one of the preceding claims, **characterized in that** the display unit (4) and/or an operating unit (5) connected to the beverage maker (1) in a wireless or wired manner is/are configured to transmit a selection (7, 7') of at least one beverage by a user to the control unit.

5. A beverage maker (1) in accordance with one of the preceding claims, **characterized in that** the display unit (4) and/or an operating unit (5) connected to the beverage maker (1) in a wireless or wired manner is/are configured
i) to accept an order number of at least one beverage by a user and to transmit it to the control unit; and/or
ii) to show a selection (7, 7') of at least one beverage by a user; and/or
iii) to show the selected beverages in a list in the event of a selection (7, 7') of a plurality of beverages by a user.

6. A beverage maker (1) in accordance with one of the preceding claims, **characterized in that** the display unit (4) and/or an operating unit (5) connected to the beverage maker (1) in a wireless or wired manner is/are configured to display (10) a status of the dispensing sector and/or of at least one outer sector.

7. A beverage maker (1) in accordance with one of the preceding claims, **characterized in that** the display unit (4) and/or an operating unit (5) connected to the beverage maker (1) in a wireless or wired manner is/are configured to accept a command to prepare the at least one selected beverage by a user, and to transmit the command to prepare the at least one selected beverage to the control unit.

8. A beverage maker (1) in accordance with one of the preceding claims, **characterized in that** the display unit (4) and/or an operating unit (5) connected to the beverage maker (1) in a wireless or wired manner is/are configured to enable an entry by a user, to no longer show a beverage container (8) shown in the outer sector or dispensing sector via the display unit (4) and/or operating unit (5), and to transmit a made entry to the control unit.

9. A beverage maker (1) in accordance with one of the preceding claims, **characterized in that** the sectors of the turntable (3) comprise at least one sensor for detecting a placed down beverage container (8) and the at least one sensor has a communicative connection to the control unit.

10. A beverage maker (1) in accordance with one of the preceding claims, **characterized in that** the sectors of the turntable (3)
i) have a grate that is suitable for placing down the beverage containers (8); and/or
ii) have a sector display unit (4) that is configured to display information on the respective sector.

11. A beverage maker (1) in accordance with one of the preceding claims, **characterized in that** the unit for preparing at least one beverage is a unit for preparing at least one beverage selected from the group comprising coffee, tea, milk, milk froth, and combinations hereof.

12. A beverage maker (1) in accordance with one of the preceding claims, **characterized in that** the beverage spout (2) is movable in the direction of the turntable (3).

13. A beverage maker (1) in accordance with one of the preceding claims, **characterized in that** the display unit (4) and/or an operating unit (5) connected to the beverage maker (1) in a wireless or wired manner comprise(s) or consist(s) of a touch-sensitive screen.

14. A method of preparing at least one beverage comprising the steps
a) After selecting (7, 7') at least one beverage at a beverage maker (1) by a user:
prompting a display unit (4) of the beverage maker (1) to show a beverage container (8) that is suitable for the at least one selected beverage in an outer sector of a turntable (3) of the beverage maker (1) that is displayed by the display unit (4).
b) After a command to prepare the at least one selected beverage:
prompting the turntable (3) to rotate such that the outer sector of the turntable (3) adopts a position of a dispensing sector of the turntable (3), with the dispensing sector of the turntable (3) being arranged beneath a beverage spout (2) of the beverage maker (1);
prompting the display unit (4) to show (9) the change of the position of the turntable (3) and of the beverage maker (1);
prompting the beverage maker (1) to prepare the at least one selected beverage by a unit of the beverage maker (1) and to dispense it into the beverage container (8) present in the dispensing sector via a beverage spout (2) fluidically connected to the unit,
wherein the steps in a) and b) are prompted by a control unit of the beverage maker (1).

15. A method in accordance with claim 14, **characterized in that** a beverage maker (1) in accordance with one of the claims 1 to 13 is used in the method.

## Revendications

1. Appareil de préparation de boissons (1), contenant
a) une unité pour la préparation d'au moins une boisson ;
b) un orifice de sortie de boisson (2) qui est relié fluidiquement à l'unité ;
c) un plateau tournant (3) avec plusieurs secteurs pour déposer au moins un récipient de boisson (8), dans lequel le plateau tournant (3) présente un secteur de référence disposé sous l'orifice de sortie de boisson (2) et au moins un secteur extérieur ;
d) une unité d'affichage (4) ;
e) une unité de commande ;
**caractérisé en ce que**
l'unité d'affichage (4) est configurée pour représenter (9) le plateau tournant (3) et une position actuelle des secteurs du plateau tournant (3), et
l'unité de commande est configurée,
après une sélection (7, 7') d'au moins une boisson sur l'appareil de préparation de boissons (1) par un utilisateur, pour amener l'unité d'affichage (4) à représenter un récipient de boisson (8), qui est au moins adapté à la boisson sélectionnée, dans un secteur extérieur du plateau tournant (3), et
après une instruction de préparation d'au moins la boisson sélectionnée, pour amener le plateau tournant (3) à tourner, de telle sorte que le secteur extérieur occupe la position du secteur de référence, pour amener l'unité d'affichage (4) à représenter (9) le changement de position du plateau tournant (3) et du récipient de boisson (8), et pour amener l'appareil de préparation de boissons (1) à préparer au moins la boisson sélectionnée à l'aide de l'unité et à la distribuer dans le récipient de boisson (8) se trouvant dans le secteur de référence par l'intermédiaire de l'orifice de sortie de boisson (2).

2. Appareil de préparation de boissons (1) selon la revendication précédente, **caractérisé en ce que** l'unité de commande est configurée, après une sélection (7) d'au moins deux boissons par un utilisateur, pour amener l'unité d'affichage (4) à représenter un récipient de boisson (8), qui est adapté à la boisson sélectionnée respective, dans un secteur extérieur respectif du plateau tournant (3).

3. Appareil de préparation de boissons (1) selon la revendication précédente, **caractérisé en ce que** l'unité de commande est configurée, après une instruction de préparation des au moins deux boissons sélectionnées, pour amener le plateau tournant (3) à tourner, de telle sorte que les secteurs extérieurs respectifs occupent successivement la position du secteur de référence, et pour amener l'unité d'affichage (4) à représenter (9) les changements des positions des récipients de boisson (8), et à amener l'appareil de préparation de boissons (1) à préparer successivement les boissons sélectionnées par l'intermédiaire de l'unité et à les distribuer dans le récipient de boisson (8) respectif se trouvant dans le secteur de référence par l'intermédiaire de l'orifice de sortie de boisson (2).

4. Appareil de préparation de boissons (1) selon l'une quelconque des revendications précédentes, **caractérisé en ce que** l'unité d'affichage (4), et/ou une unité de commande utilisateur (5) reliée sans fil ou de manière filaire à l'appareil de préparation de boissons (1), est configurée pour transmettre à l'unité de commande une sélection (7, 7') d'au moins une boisson par un utilisateur.

5. Appareil de préparation de boissons (1) selon l'une quelconque des revendications précédentes, **caractérisé en ce que** l'unité d'affichage (4), et/ou une unité de commande utilisateur (5) reliée sans fil ou de manière filaire à l'appareil de préparation de boissons (1) est configurée
i) pour recevoir un numéro de commande (6) d'au moins une boisson par un utilisateur et pour le transmettre à l'unité de commande ; et/ou
ii) pour représenter une sélection (7, 7') d'au moins une boisson par un utilisateur ; et/ou
iii) dans le cas d'une sélection (7, 7') de plusieurs boissons par un utilisateur, de représenter les boissons sélectionnées dans une liste.

6. Appareil de préparation de boissons (1) selon l'une quelconque des revendications précédentes, **caractérisé en ce que** l'unité d'affichage (4), et/ou une unité de commande utilisateur (5) reliée sans fil ou de manière filaire à l'appareil de préparation de boissons (1), est configurée pour afficher (10) un état du secteur de référence et/ou d'au moins un secteur extérieur.

7. Appareil de préparation de boissons (1) selon l'une quelconque des revendications précédentes, **caractérisé en ce que** l'unité d'affichage (4), et/ou une unité de commande utilisateur (5) reliée sans fil ou de manière filaire à l'appareil de préparation de boissons (1), est configurée pour recevoir d'un utilisateur une instruction de préparation d'au moins la boisson sélectionnée, et pour transmettre à l'unité de commande l'instruction de préparation d'au moins la boisson sélectionnée.

8. Appareil de préparation de boissons (1) selon l'une quelconque des revendications précédentes, **caractérisé en ce que** l'unité d'affichage (4), et/ou une unité de commande utilisateur (5) reliée sans fil ou de manière filaire à l'appareil de préparation de boissons (1), est configurée pour permettre une saisie par un utilisateur, pour ne plus représenter un récipient de boisson (8) représenté dans le secteur extérieur ou secteur de référence par l'intermédiaire de l'unité d'affichage (4) et/ou l'unité de commande utilisateur (5), et pour transmettre une saisie effectuée à l'unité de commande.

9. Appareil de préparation de boissons (1) selon l'une quelconque des revendications précédentes, **caractérisé en ce que** les secteurs du plateau tournant (3) présentent au moins un capteur de détection d'un récipient de boisson (8) déposé et qu'au moins le capteur présente une liaison de communication avec l'unité de commande.

10. Appareil de préparation de boissons (1) selon l'une quelconque des revendications précédentes, **caractérisé en ce que** les secteurs du plateau tournant (3)
i) présentent une grille, qui est adaptée pour le dépôt de récipients de boisson (8) ; et/ou
ii) présentent une unité d'affichage de secteur qui est configurée pour afficher une information sur le secteur concerné.

11. Appareil de préparation de boissons (1) selon l'une quelconque des revendications précédentes, **caractérisé en ce que** l'unité de préparation d'au moins une boisson est une unité de préparation d'au moins une boisson choisie dans le groupe constitué par le café, le thé, le lait, la mousse de lait et des combinaisons de ceux-ci.

12. Appareil de préparation de boissons (1) selon l'une quelconque des revendications précédentes, **caractérisé en ce que** l'orifice de sortie de boisson (2) est mobile en direction du plateau tournant (3).

13. Appareil de préparation de boissons (1) selon l'une quelconque des revendications précédentes, **caractérisé en ce que** l'unité d'affichage (4), et/ou une unité de commande utilisateur (5) reliée sans fil ou de manière filaire à l'appareil de préparation de boissons (1) contient un écran tactile ou en est constituée.

14. Procédé de préparation d'au moins une boisson, comprenant les étapes suivantes
a) après une sélection (7, 7') d'au moins une boisson sur un appareil de préparation de boissons (1) par un utilisateur : amener une unité d'affichage (4) de l'appareil de préparation
de boissons (1) à représenter un récipient de boisson (8), qui est adapté au moins à la boisson sélectionnée, dans un secteur extérieur d'un plateau tournant (3) de l'appareil de préparation de boissons (1), qui est affiché par l'unité d'affichage ;
b) après une instruction de préparation d'au moins la boisson sélectionnée :
amener le plateau tournant (3) à tourner de telle sorte que le secteur extérieur du plateau tournant (3) occupe une position d'un secteur de référence du plateau tournant (3), dans lequel le secteur de référence du plateau tournant (3) est disposé sous un orifice de sortie de boisson (2) de l'appareil de préparation de boissons (1) ;
amener l'unité d'affichage (4) à représenter (9) le changement de position du plateau tournant (3) et du récipient de boisson (8) ;
amener l'appareil de préparation de boissons (1) à préparer au moins la boisson sélectionnée à l'aide d'une unité de l'appareil de préparation de boissons (1) et à la distribuer dans le récipient de boisson (8) se trouvant dans le secteur de référence par l'intermédiaire d'un orifice de sortie de boisson (2) relié fluidiquement à l'unité,
dans lequel les étapes a) et b) sont déclenchées par une unité de commande de l'appareil de préparation de boissons (1).

15. Procédé selon la revendication 14, **caractérisé en ce que** le procédé utilise un appareil de préparation de boissons (1) selon l'une quelconque des revendications 1 à 13.
